# EUROPÄISCHE PATENTSCHRIFT

(11) **EP 2 435 915 B1**
(45) Veröffentlichungstag und Bekanntmachung des Hinweises auf die Patenterteilung: **14.05.2014**
(21) Anmeldenummer: 09782908.9
(22) Anmeldetag: 11.09.2009
(51) Int. Cl.: G06F 11/07

(54) **VERRINGERUNG DER REAKTIONSZEIT IN EINEM SYSTEM ZUR ÜBERWACHUNG EINES FUNKTIONSRECHNERS**
REDUCING THE RESPONSE TIME IN A SYSTEM FOR MONITORING A FUNCTION COMPUTER
RÉDUCTION DU DÉLAI DE RÉACTION DANS UN SYSTÈME DE SURVEILLANCE D'UN CALCULATEUR FONCTIONNEL

(30) Priorität: 11.11.2008 DE 102008043648
(43) Veröffentlichungstag der Anmeldung: 04.04.2012
(73) Patentinhaber: Robert Bosch GmbH, 70442 Stuttgart (DE)
(72) Erfinder: DOERR, Bernd, 74731 Wallduern (DE); SCHLESER, Roland, 74245 Loewenstein (DE); NIEMANN, Holger, 71640 Ludwigsburg (DE); DAMM, Daniel, 71638 Ludwigsburg (DE); HEYL, Andreas, 71640 Ludwigsburg (DE)
(86) Internationale Anmeldenummer: PCT/EP2009/061796
(87) Internationale Veröffentlichungsnummer: WO 2010/054873

(56) Entgegenhaltungen:
- US-A- 5 978 939
- US-A1- 2004 153 886
- US-B1- 6 370 656

## Beschreibung

### Stand der Technik

Die Erfindung betrifft ein Verfahren zur Verringerung der Reaktionszeit in einem System zur Überwachung eines Funktionsrechners, bei dem zwischen einem Überwachungsmodul und dem mittels des Überwachungsmoduls zu überwachenden Funktionsrechners eine Frage-Antwort-Kommunikation durchgeführt wird, wobei
- das Überwachungsmodul eine Frage an den Funktionsrechner übermittelt,
- der Funktionsrechner in Abhängigkeit von der Frage eine Antwort bestimmt,
- die Antwort an das Überwachungsmodul übermittelt wird,
- die von dem Überwachungsmodul empfangene Antwort ausgewertet wird und ein dem Überwachungsmodul zugeordneter Fehlerzähler inkrementiert wird, falls die Antwort nicht mit einer erwarteten Antwort übereinstimmt, wobei eine Antwort dann mit einer erwarteten Antwort übereinstimmt, wenn die Antwort einen bestimmten Inhalt aufweist und die Antwort zu einem vorgebbaren Zeitpunkt oder innerhalb eines vorgebbaren Zeitbereichs von dem Funktionsrechner an das Überwachungsmodul übermittelt oder von dem Überwachungsmodul empfangen wird und der dem Überwachungsmodul zuordneter Fehlerzähler dekrementiert wird, falls die Antwort mit einer erwarteten Antwort übereinstimmt.

Die Erfindung betrifft ferner ein System, das einen Funktionsrechner und ein Überwachungsmodul zur Überwachung des Betriebs des Funktionsrechners umfasst, wobei
- der Funktionsrechner Mittel zur Erzeugung einer Antwort in Abhängigkeit von einer von dem Überwachungsmodul an den Funktionsrechner übermittelten Frage aufweist;
- das System Mittel zur Übermittlung der Antwort an das Überwachungsmodul umfasst;
- dem Überwachungsmodul ein Auswertemittel zur Auswertung der empfangenen Antwort und ein Fehlerzähler zugeordnet sind, wobei der Fehlerzähler inkrementierbar ist, falls die empfangene Antwort nicht mit einer erwarteten Antwort übereinstimmt, wobei eine Antwort dann mit einer erwarteten Antwort übereinstimmt, wenn die Antwort einen bestimmten Inhalt aufweist und die Antwort zu einem vorgebbaren Zeitpunkt oder innerhalb eines vorgebbaren Zeitbereichs von dem Funktionsrechner an das Überwachungsmodul übermittelt oder von dem Überwachungsmodul empfangen wird.

Um eine Fehlfunktion eines Funktionsrechners, beispielsweise eines sogenannten Embedded Systems, erkennen zu können und möglichst zuverlässig einen definierten Zustand wieder herstellen zu können, ist es insbesondere bei sicherheitskritischen Anwendungen bekannt, ein Überwachungsmodul vorzusehen. Das Überwachungsmodul wird beispielsweise als Watchdog bezeichnet und ermöglicht eine Frage-Antwort-Kommunikation mit dem Funktionsrechner. Dabei sendet das Überwachungsmodul zyklisch zufällig ausgewählte oder erzeugte Fragen an den Funktionsrechner, worauf dieser innerhalb einer vorgegebenen Zeitspanne eine erwartete Antwort an das Überwachungsmodul zurücksenden muss. Entspricht die Antwort nicht der erwarteten Antwort, so wird von einer Fehlfunktion des Funktionsrechners ausgegangen. Eine nicht erwartete Antwort kann hierbei eine inhaltlich nicht korrekte Antwort sein oder eine zu einem falschen Zweitpunkt an das Überwachungsmodul übermittelte Antwort.

Zur Realisierung der Frage-Antwort-Kommunikation wird häufig ein Bussystem, beispielsweise der sogenannte Serial Peripheral Interface (SPI)-Bus eingesetzt, wobei der Funktionsrechner als Master und das Überwachungsmodul als Slave an das Bussystem angeschlossen sind. Ferner können weitere periphere Bausteine vorgesehen sein, die ebenfalls als Slaves an das Bussystem angeschlossen sind. Der Funktionsrechner ist häufig mittels eines Schnittstellenmoduls an das Bussystem angeschlossen, wobei das Schnittstellenmodul das Senden und Empfangen von Daten beziehungsweise das Senden einer Antwort und das Empfangen einer Frage über das Bussystem ermöglicht.

Solcherart überwachte Funktionsrechner werden beispielsweise in Steuergeräten zur Steuerung und Regelung des Betriebs von Kraftfahrzeugen eingesetzt. Hierbei muss gewährleistet sein, dass eine Fehlfunktion eines Funktionsrechners so schnell erkannt wird, dass ein fehlerhafter Momentenaufbau, also eine ungewollte Beschleunigung durch einen defekten Funktionsrechner, zuverlässig verhindert werden kann. In mit Verbrennungsmotoren angetriebenen Kraftfahrzeugen ist es häufig ausreichend, wenn eine Fehlfunktion innerhalb von vierhundert bis fünfhundert Millisekunden erkannt werden kann und beispielsweise durch das Steuergerät ein Reset des Funktionsrechners eingeleitet oder eine Endstufe, die für den Momentenaufbau angesteuert wird, abgeschaltet werden kann.

Eine besonders hohe Zuverlässigkeit wird dadurch erreicht, dass das Überwachungsmodul von dem Funktionsrechner überwacht wird. Hierzu sendet der Funktionsrechner zu fest vorgegebenen oder zufälligen Zeitpunkten Antworten, deren Inhalt nicht dem erwarteten Inhalt entspricht oder Antworten, die nicht zu dem erwarteten Zeitpunkt an das Überwachungsmodul übermittelt werden. Stellt das Überwachungsmodul einen Fehler bei dem Funktionsrechner fest, so wird dies in einem Fehlerzähler des Überwachungsmoduls angezeigt. Auch bei dem Funktionsrechner kann ein Fehlerzähler vorhanden sein, mittels dessen ein bei dem Überwachungsmodul erkannter Fehler gekennzeichnet wird. Sendet der Funktionsrechner absichtlich eine nicht erwartete Antwort an das Überwachungsmodul und wird der Fehlerzähler in dem Überwachungsmodul nicht verändert, so kann der Funktionsrechner auf eine Fehlfunktion bei dem Überwachungsmodul schließen. Hierzu benötigt der Funktionsrechner einen Zugriff auf den Fehlerzähler des Überwachungsmoduls, was beispielsweise dadurch realisiert wird, dass der aktuelle Stand des Fehlerzählers zusammen mit einer Frage während der Kommunikation von dem Überwachungsmodul an den Funktionsrechner übermittelt wird.

Empfängt das Überwachungsmodul eine nicht erwartete Antwort, so kann beispielsweise der Fehlerzähler des Überwachungsmoduls inkrementiert werden. In jedem Zyklus, in dem das Überwachungsmodul eine Antwort von dem Funktionsrechner erhält, die der erwarteten Antwort entspricht, dekrementiert das Überwachungsmodul den Fehlerzähler, wenn dieser nicht bereits den Wert Null erreicht hat. Während des Betriebs eines Steuergeräts, das ein Überwachungssystem aufweist, schwankt folglich der Fehlerzähler in dem Überwachungsmodul bereits aufgrund der Tatsache, dass der Funktionsrechner den in dem Überwachungsmodul angeordneten Fehlerzähler nutzt, um die Funktion des Überwachungsmoduls zu überwachen.

Dem Überwachungsmodul ist ein oberer Schwellwert fest vorgegeben. Erreicht der Fehlerzähler in dem Überwachungsmodul diesen Schwellwert, so wird eine Sicherheitsfunktion ausgelöst. Beispielsweise wird eine Endstufe abgeschaltet oder der Funktionsrechner wird zurückgesetzt (Reset). Die Reaktionszeit des Überwachungssystems ist damit abhängig von dem Schwellwert, da ein auftretender Defekt bei dem Funktionsrechner bis zu fünf Prüfzyklen benötigen kann.

Aufgabe der Erfindung ist es, eine Verringerung der Reaktionszeit des Überwachungssystems zu erreichen, ohne dass eine Änderung an den Überwachungsmodulen vorgenommen werden muss und ohne dass der Abstand zwischen den einzelnen Frage-Antwort-Zyklen, also der Kommunikation zwischen dem Funktionsrechner und dem Überwachungsmodul, erhöht werden muss.

### Offenbarung der Erfindung

Die Aufgabe wird durch ein Verfahren der eingangs genannten Art dadurch gelöst, dass von dem Funktionsrechner ein aktueller Stand des Fehlerzählers geprüft wird und wenn der Fehlerzähler einen vorbestimmbaren Mindestwert erreicht oder unterschreitet, der Funktionsrechner das Übersenden einer der erwarteten Antwort nicht entsprechenden Antwort an das Überwachungsmodul veranlasst.

Der Funktionsrechner prüft folglich den Stand des Fehlerzählers, der dem Überwachungsmodul zugeordnet ist. Sollte diese Überprüfung ergeben, dass der Fehlerzähler kleiner oder gleich einem bestimmten Mindestwert ist, veranlasst der Funktionsrechner die Erhöhung des Fehlerzählers dadurch, dass er eine Antwort übersendet, die nicht der erwarteten Antwort entspricht. Dadurch ist es möglich, den Fehlerzähler stets auf oder nahe unter dem Mindestwert zu halten, wobei der Mindestwert einen Wert zwischen dem Nullwert des Fehlerzählers und dem Maximalwert des Fehlerzählers entspricht. Die Reaktionszeit des Systems wird nun dadurch reduziert, dass im Falle einer auftretenden Fehlfunktion des Funktionsrechners weniger Prüfzyklen durchlaufen werden müssen, bis der Maximalwert des Fehlerzählers erreicht wird und die entsprechende Sicherheitsfunktion ausgelöst werden kann.

Vorzugsweise wird die nicht der erwarteten Antwort entsprechende Antwort (also die Falschantwort) unabhängig von einer aktuellen zu beantwortenden Frage an das Überwachungsmodul gesendet, falls der Fehlerzähler einen vorbestimmbaren Mindestwert erreicht oder unterschreitet und die Differenz des aktuellen Zählerstands des Fehlerzählers und eines Höchstwertes des Fehlerzählers größer oder gleich dem Wert 3 ist. Bei bekannten Überwachungssystemen führt eine Antwort, die verspätet - also nicht zu dem erwarteten Zeitpunkt beziehungsweise innerhalb des erwarteten Zeitbereichs - an das Überwachungsmodul von dem Funktionsrechner übermittelt wird, dazu, dass der Fehlerzähler um den Wert 2 erhöht wird, da eine solche verspätete Antwort in einem Prüfungszyklus als verspätet und in einem darauf folgenden Prüfungszyklus als verfrüht von dem Überwachungsmodul interpretiert wird. Hierbei muss allerdings sichergestellt sein, dass durch das Erhöhen des Fehlerzählers nicht der Höchstwert erreicht wird, weil dann die Sicherheitsfunktion ausgelöst werden würde. Damit wird erreicht, dass der Funktionsrechner beispielsweise nur in jedem zweiten Prüfzyklus den Fehlerzähler des Überwachungsmoduls auswerten muss.

Vorzugsweise wird die Antwort, die nicht der erwartenden Antwort entspricht, innerhalb des vorgegebenen Zeitbereichs beziehungsweise zu dem vorgegebenen Zeitpunkt von dem Funktionsrechner an das Überwachungsmodul übermittelt, wenn der Fehlerzähler des Überwachungsmoduls einen vorbestimmbaren Mindestwert erreicht oder unterschreitet und wenn die Differenz des aktuellen Zählerstands des Fehlerzählers und eines Höchstwertes des Fehlerzählers größer oder gleich dem Wert 2 ist. In diesen Fällen wird der Fehlerzähler des Überwachungsmoduls regelmäßig nur um den Wert 1 erhöht. Damit ist sichergestellt, dass diese bewusste Erhöhung des Fehlerzählers nicht zu einer Auslösung der Sicherheitsfunktion führen kann.

Vorzugsweise beträgt der vorbestimmte Höchstwert des Fehlerzählers 5. Dies ermöglicht den Einsatz einer Vielzahl bekannter Überwachungsmodule, ohne dass eine Änderung dieser Überwachungsmodule vorgenommen werden müsste.

Gemäß einer weiteren Ausführungsform veranlasst der Funktionsrechner das Übersenden der Falschantwort an das Überwachungsmodul, wenn der aktuelle Stand des Fehlerzählers des Überwachungsmoduls um mindestens den Wert 2 kleiner ist als der Höchstwert des Fehlerzählers.

Gemäß einer anderen Ausführungsform veranlasst der Funktionsrechner das Übersenden der Falschantwort, wenn der aktuelle Stand des Fehlerzählers um mindestens den Wert 3 kleiner ist als der Höchstwert des Fehlerzählers. Dadurch kann unabhängig von dem Höchstwert des Fehlerzählers eine besonders kurze Reaktionszeit des Überwachungssystems erreicht werden.

Die Aufgabe wird auch durch ein System der eingangs genannten Art dadurch gelöst, dass der Funktionsrechner Prüfmittel zum Prüfen eines aktuellen Stands des Fehlerzählers des Überwachungsmoduls und Mittel zur Veranlassung der Übermittlung einer Falschantwort an das Überwachungsmodul aufweist, wobei die Falschantwort nicht einer erwarteten Antwort entspricht und die Übermittlung der Falschantwort an das Überwachungsmodul dann veranlasst wird, wenn die Prüfung des aktuellen Stands des Fehlerzählers ergibt, dass der Fehlerzähler einen vorbestimmbaren Mindestwert unterschreitet. Vorzugsweise ist das erfindungsgemäße System zur Durchführung des erfindungsgemäßen Verfahrens geeignet.

Weitere Merkmale und Vorteile der Erfindung sind in den Zeichnungen dargestellt und im folgenden beschrieben. Es zeigen:
- Figur 1: eine schematische Darstellung eines Steuergeräts mit einem Funktionsrechner und einem Überwachungsmodul, die zur Durchführung des erfindungsgemäßen Verfahrens geeignet sind;
- Figur 2: ein schematisches Ablaufdiagramm einer beispielhaften Ausführungsform des erfindungsgemäßen Verfahrens zur Überwachung eines Funktionsrechners; und
- Figuren 3a und 3b: ein schematischer Vergleich der Reaktionszeiten bei einem bekannten System und dem erfindungsgemäßen System bzw. Verfahren zur Überwachung eines Funktionsrechners.

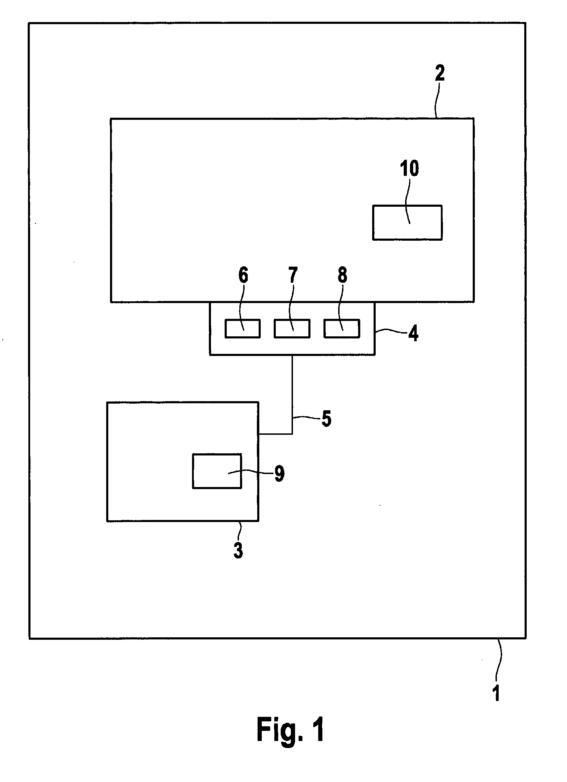

In Figur 1 ist ein Steuergerät 1 dargestellt, das einen Funktionsrechner 2 und ein Überwachungsmodul 3 aufweist. Dem Funktionsrechner 2 ist ein Schnittstellenmodul 4 zugeordnet, das mittels eines Bussystems 5 mit dem Überwachungsmodul 3 verbunden ist. Der Funktionsrechner 2 ist beispielsweise ein Embedded System, das für die Durchführung einer oder mehrerer Funktionen hergerichtet ist. Das Überwachungsmodul 3 ist beispielsweise ein sogenannter Watchdog. In dem Schnittstellenmodul 4 sind ein erster Speicherbereich 6, ein zweiter Speicherbereich 7 und ein dritter Speicherbereich 8 angeordnet. Der erste Speicherbereich ist für das Zwischenspeichern von Fragen vorgesehen, die von dem Überwachungsmodul 3 über das Bussystem 5 an den Funktionsrechner 2 übermittelt werden. Der zweite Speicherbereich 7 ist für das Zwischenspeichern von Antworten vorgesehen, die von dem Funktionsrechner 2 an das Überwachungsmodul 3 über das Bussystem 5 übermittelt werden sollen. In dem dritten Speicherbereich 8 werden von dem Funktionsrechner 2 Instruktionen abgelegt, die eine Steuerung der Arbeitsweise des Schnittstellenmoduls 4 ermöglichen.

Das Bussystem 5 ist beispielsweise als SPI-Bus ausgebildet, das eine synchrone serielle Datenkommunikation nach dem sogenannten Master-Slave-Prinzip ermöglicht. Das Bussystem 5 kann hierbei durch drei Leitungen realisiert sein, an denen jeder Teilnehmer angeschlossen ist, wobei eine Leitung für die Kommunikation von dem Funktionsrechner zu dem Überwachungsmodul, eine Leitung für die Kommunikation von dem Überwachungsmodul an den Funktionsrechner und eine Leitung für den seriellen Zeitgeber vorgesehen ist. Selbstverständlich kann das Bussystem 5 mittels einer Vielzahl weiterer bekannter Bussysteme realisiert werden.

In dem Überwachungsmodul 3 ist ein erster Fehlerzähler 9 und in dem Funktionsrechner 2 ist ein zweiter Fehlerzähler 10 angeordnet. Die Fehlerzähler 9, 10 sind beispielsweise binäre Zähler, die Werte von Null bis Fünf darstellen können. Stellt das Überwachungsmodul 3 fest, dass eine von dem Funktionsrechner 2 an das Überwachungsmodul 3 übermittelte Antwort nicht einer erwarteten Antwort entspricht, also beispielsweise nicht in dem erwarteten Zeitfenster übermittelt worden ist oder nicht den erwarteten Inhalt hat, so veranlasst das Überwachungsmodul 3 eine Erhöhung des ersten Fehlerzählers 9. Wenn der erste Fehlerzähler 9 einen vorbestimmten Wert erreicht, so veranlasst das Überwachungsmodul 3 beispielsweise einen Reset des Funktionsrechners 2 und/oder eine Deaktivierung von Endstufen (nicht in Figur 1 dargestellt).

Von Zeit zu Zeit übersendet der Funktionsrechner 2 Antworten an das Überwachungsmodul 3, deren Inhalt nicht dem erwarteten Inhalt entspricht oder der Funktionsrechner 2 übersendet die Antworten nicht zu dem erwarteten Zeitpunkt. Stellt der Funktionsrechner dann fest, dass der erste Fehlerzähler 9 von dem Überwachungsmodul 3 nicht erhöht worden ist, so schließt der Funktionsrechner 2 auf einen Fehler bei dem Überwachungsmodul 3 und erhöht den zweiten Fehlerzähler 10. Erreicht der zweite Fehlerzähler 10 einen vorgebbaren Schwellwert, so kann dieser möglicherweise ebenfalls eine Deaktivierung der Endstufen veranlassen und/oder ein Reset des Bussystems 5 und/oder des Überwachungsmoduls 3 veranlassen. Selbstverständlich sind eine Vielzahl weiterer Fehlerbehandlungsmöglichkeiten denkbar und vom Markt her bekannt.

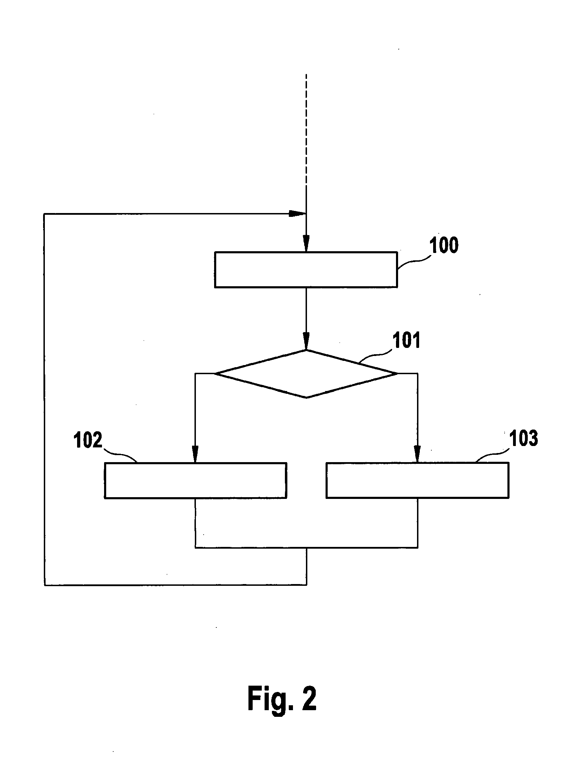

Auf dem in Figur 1 beispielhaft dargestellten Steuergerät 1 kann das erfindungsgemäße Verfahren gemäß einer ersten Ausführungsform, wie in Figur 2 schematisiert dargestellt, ausgeführt werden. Die Verfahrensschritte des erfindungsgemäßen Verfahrens werden beispielsweise bei jedem Kommunikationszyklus ausgeführt. Der Kommunikationszyklus wird beispielsweise in fest vorgegebenen Zeitpunkten durch den Funktionsrechner 2 gestartet. In einem Schritt 100 wird der Stand des Fehlerzählers des Überwachungsmoduls 3 durch den Funktionsrechner 2 ausgelesen. In einem Schritt 101 wird geprüft, ob der Stand des Fehlerzählers 9 kleiner als ein vorgegebener Mindestwert ist. Ist dies der Fall, so wird in einem Schritt 102 die Übermittlung einer Falschantwort von dem Funktionsrechner 2 an das Überwachungsmodul 3 veranlasst. Ist der Stand des Fehlerzählers 9 jedoch größer oder gleich dem Mindestwert, so wird in einem Schritt 103 die Übermittlung der erwarteten Antwort veranlasst. Der Kommunikationszyklus kann dann in bekannter Weise fortgesetzt werden.

In dem Schritt 101 könnte selbstverständlich auch abgefragt werden, ob der Fehlerzähler 9 kleiner oder gleich dem Mindestwert ist. Insbesondere kann der Mindestwert in Abhängigkeit von dem Höchstwert definiert werden. Beispielsweise kann vorgesehen sein, dass der Mindestwert um den Wert 2 oder um den Wert 3 kleiner als der mögliche Höchstwert des Fehlerzählers 9 ist. Damit kann unabhängig von dem verwendeten Überwachungsmodul 3 sichergestellt werden, dass eine besonders kurze Reaktionszeit möglich ist.

Ferner könnte in dem Schritt 101 oder in beziehungsweise vor dem Schritt 102 überprüft werden, wie groß die Differenz des aktuellen Zählerstandes 9 zu dem Höchstwert ist. In Abhängigkeit hiervon könnte dann entschieden werden, ob die Falschantwort innerhalb des erwarteten Zeitbereichs oder außerhalb des erwarteten Zeitbereichs übersendet werden soll. Wie bereits beschrieben, könnte damit erreicht werden, dass der Fehlerzähler 9 durch das Überwachungsmodul 3 entweder um den Wert 1 oder sogar um den Wert 2 inkrementiert wird.

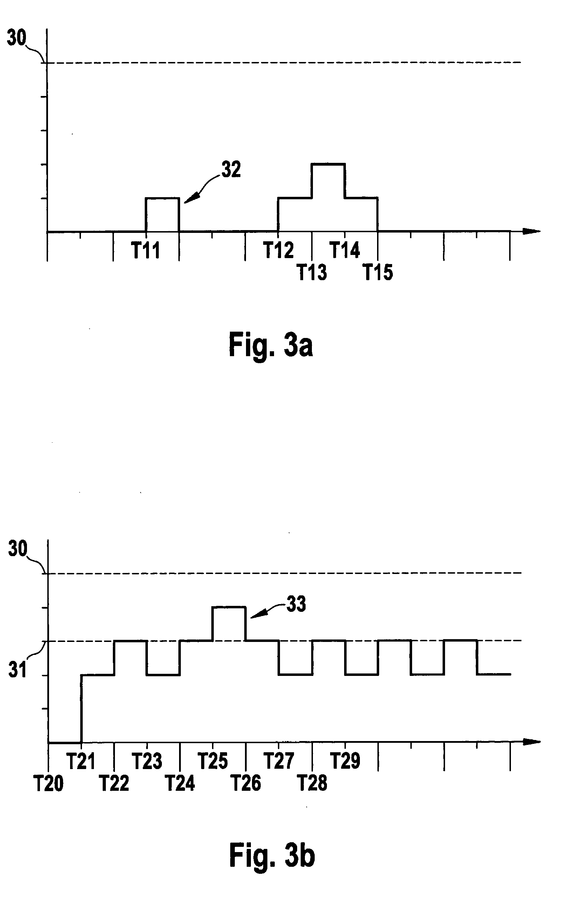

In Figur 3a ist beispielhaft die Reaktionszeit dargestellt, wie sie mittels eines bekannten Überwachungsmoduls 3 mit den bekannten Verfahren erreichbar ist. Der Fehlerzähler 9 des Überwachungsmoduls 3 hat beispielsweise einen Maximalwert 30 von fünf. Erreicht der Fehlerzähler 9 diesen Maximalwert, so wird eine Sicherheitsfunktion ausgelöst. Beispielsweise wird eine Endstufe in dem Steuergerät deaktiviert und/oder es wird ein Reset des Funktionsrechners 2 veranlasst. Im Normalzustand hat der Fehlerzähler 9 den Wert Null. Dies bedeutet, dass die Reaktionszeit bis zum Aktivieren der Sicherheitsfunktion fünf Prüfzyklen entspricht, d.h. der Fehlerzähler 9 muss fünf mal um den Wert eins inkrementiert werden, bis er schließlich den Maximalwert 30 erreicht.

In den Figur 3a ist ein beispielhafter Verlauf 32 des Zählerstandes des Fehlerzählers 9 dargestellt. Tritt ein vorübergehender Fehler bei dem Funktionsrechner 3 oder bei der Kommunikation zwischen dem Funktionsrechner 2 und dem Überwachungsmodul 3 auf, so wird der Fehlerzähler 9 inkrementiert. Der Fehlerzähler 9 wird auch inkrementiert, wenn der Funktionsrechner 2 zum Zwecke des Testens der Funktionsfähigkeit des Überwachungsmoduls 3 eine Falschantwort an das Überwachungsmodul 3 übersendet, um die Funktionsfähigkeit des Überwachungsmoduls 3 zu überprüfen. In den beispielhaft angegebenen Zeitpunkten T11, T12 und T13 wurde von dem Überwachungsmodul 3 jeweils der Empfang einer nicht erwarteten Antwort erkannt. Ursache für den Empfang der nicht erwarteten Antwort ist beispielsweise eine Prüfung der Funktionsfähigkeit des Überwachungsmoduls 3 durch den Funktionsrechner 2, das Vorliegen eines Fehlers bei dem Funktionsrechner 2 oder das Vorliegen eines Fehlers in der Kommunikationsverbindung zwischen dem Überwachungsmodul 3 und dem Funktionsrechner 2. In diesen Zeitpunkten wird dann der Zählerstand des Fehlerzählers 9 jeweils um den Wert 1 erhöht.

In dem Zeitpunkten T14 und T15, sowie in allen übrigen, in Figur 3a nicht näher bezeichneten Zeitpunkten wird eine erwartete Antwort von dem Überwachungsmodul 3 empfangen. Deshalb wird der Zählerstand des Fehlerzählers 9 um den Wert 1 heruntergezählt bzw. verbleibt bei dem Wert 0.

In Figur 3b ist anhand eines anderen beispielhaften Verlaufs 33 des Zählerstandes des Fehlerzählers 9 dargestellt, wie sich das erfindungsgemäße Verfahren auf den Zählerstand des Fehlerzählers 9 auswirken kann.

In einem Zeitpunkt T20 wird das Überwachungsmodul 3 initialisiert. In einem Zeitpunkt T21 wird von dem Funktionsrechner 2 erkannt, dass der Fehlerzähler 9 unter einem Mindestwert 31 liegt, der beispielhaft den Wert 3 hat. Der Funktionsrechner 2 veranlasst deshalb die Übersendung einer Antwort zu einem verspäteten Zeitpunkt an das Überwachungsmodul 3. Dadurch wird der Zählerstand des Fehlerzählers 9 um den Wert 2 erhöht. Selbstverständlich ist es auch möglich, dass der Fehlerzähler 9 lediglich um den Wert 1 erhöht wird.

Vor dem Zeitpunkt T22 liegt der Zählerstand des Fehlerzählers 9 noch immer unterhalb des Mindestwertes 31. Deshalb wird eine Falschantwort an das Überwachungsmodul 3 übersandt, so dass der Zählerstand des Fehlerzählers 9 ab dem Zeitpunkt T22 dem Mindestwert 31 entspricht.

In dem Zeitpunkt T23 wird nun von dem Überwachungsmodul 3 eine erwartete Antwort empfangen. Diese wurde von dem Funktionsrechner 2 an das Überwachungsmodul 3 übersandt, da der Zählerstand des Fehlerzählers 9 zum Zeitpunkt der Abfrage des Fehlerzählers 9 durch den Funktionsrechner 9, also vor dem Zeitpunkt T23, dem Mindestwert 31 entsprach. Dies bewirkt, dass das Überwachungsmodul 3 den Zählerstand des Fehlerzählers 9 verringert. Wird der Fehlerzähler 9 nun wieder durch den Funktionsrechner 2 abgefragt, so erkennt dieser, dass der aktuelle Zählerstand wieder unterhalb des Mindestwertes 31 ist. Deshalb übermittelt der Funktionsrechner 2 wieder eine Falschantwort an das Überwachungsmodul 3. Der Empfang dieser Falschantwort durch das Überwachungsmodul 3 bewirt in dem Zeitpunkt T24 eine Erhöhung des Fehlerzählers 9.

Nach dem Zeitpunkt T24 tritt nun tatsächlich ein Fehler in dem Funktionsrechner 2 auf, woraufhin der Funktionsrechner 2 eine Falschantwort erzeugt. Zum Zeitpunkt T25 wird deshalb der Fehlerzähler 9 nochmals um den Wert 1 erhöht.

In den Zeitpunkten T26 und T27 wurde jeweils die erwartete Antwort an das Überwachungsmodul 3 übermittelt, so dass der Fehlerzähler 9 in beiden Zeitpunkten beispielsweise um den Wert 1 dekrementiert wird. Dies bedeutet, dass der Zählerstand nun kleiner als der Mindestwert 31 ist. Dies wird von dem Funktionsrechner 2 erkannt und es wird eine Falschantwort an das Überwachungsmodul 3 übersandt, was wiederum das Überwachungsmodul 3 in dem Zeitpunkt T 28 dazu veranlasst, den Zählerstand des Fehlerzählers 9 zu erhöhen, so dass dieser wieder dem Mindestwert 31 entspricht, der Funktionsrechner folglich wieder die erwartete Antwort (soweit keine Fehlfunktion vorliegt) an das Überwachungsmodul 3 übersendet, das Überwachungsmodul 3 den Zählerstand des Fehlerzählers 9 in dem Zeitpunkt T29 wieder dekrementiert, usw..

Mittels des erfindungsgemäßen Verfahrens wird gegenüber dem Stand der Technik erreicht, dass auch mit bekannten Überwachungsmodulen 3 eine Verkürzung der Reaktionszeit dadurch erreichbar ist, dass ein Vorhalten eines endlichen Wertes größer als Null für den Fehlerzähler 9 in dem Überwachungsmodul 3 sichergestellt ist. Wie in Figur 3b dargestellt, wird der Fehlerzähler 9 stets auf den Mindestwert 31 gesetzt, sobald der Fehlerzähler 9 unter diesen Wert gefallen ist. Bei dem in Figur 3b dargestellten Ausführungsbeispiel ergibt sich folglich eine maximale Reaktionszeit, die dem Durchlaufen von drei Prüfzyklen entspricht, wohingegen bei dem aus dem Stand der Technik bekannten Verfahren unter Verwendung desselben Überwachungsmoduls 3 eine Reaktionszeit vorhanden ist, die fünf Prüfzyklen entspricht.

## Patentansprüche

1. Verfahren zur Verringerung der Reaktionszeit in einem System zur Überwachung eines Funktionsrechners (2), bei dem zwischen einem Überwachungsmodul (3) und dem mittels des Überwachungsmoduls (3) zu überwachenden Funktionsrechners (2) eine Frage-Antwort-Kommunikation durchgeführt wird, wobei
- das Überwachungsmodul (3) eine Frage an den Funktionsrechner (2) übermittelt;
- der Funktionsrechner (2) in Abhängigkeit von der Frage eine Antwort bestimmt;
- die Antwort an das Überwachungsmodul (3) übermittelt wird;
- die empfangene Antwort ausgewertet wird und ein dem Überwachungsmodul (3) zugeordneter Fehlerzähler (9) inkrementiert wird, falls die Antwort nicht mit einer erwarteten Antwort übereinstimmt, wobei eine Antwort dann mit einer erwarteten Antwort übereinstimmt, wenn die Antwort einen bestimmten Inhalt aufweist und die Antwort zu einem vorgebbaren Zeitpunkt oder innerhalb eines vorgebbaren Zeitbereichs von dem Funktionsrechner (2) an das Überwachungsmodul (3) übermittelt oder von dem Überwachungsmodul (3) empfangen wird und der dem Überwachungsmodul zuordneter Fehlerzähler dekrementiert wird, falls die Antwort mit einer erwarteten Antwort übereinstimmt; und
- ein aktueller Stand des Fehlerzählers (9) geprüft wird und eine Aktion ausgelöst wird, wenn der Fehlerzähler (9) einen vorbestimmten Höchstwert (30) erreicht oder überschreitet;
**dadurch gekennzeichnet, dass**
von dem Funktionsrechner (2) der aktuelle Zählerstand des Fehlerzählers (9) geprüft wird und wenn der Zählerstand des Fehlerzählers (9) einen vorbestimmbaren Mindestwert (31) unterschreitet, der Funktionsrechner (2) das Übersenden einer der erwarteten Antwort nicht entsprechenden Antwort an das Überwachungsmodul (3) veranlasst.

2. Verfahren nach Anspruch 1, **dadurch gekennzeichnet, dass** wenn der Zählerstand des Fehlerzählers (9) den vorbestimmbaren Mindestwert (31) erreicht oder unterschreitet und wenn die Differenz aus dem aktuellen Zählerstand des Fehlerzählers (9) und dem vorbestimmten Höchstwert (30) größer oder gleich dem Wert 3 ist, die Antwort unabhängig von einer aktuell zu beantwortenden Frage an das Überwachungsmodul (3) gesendet wird.

3. Verfahren nach einem der Ansprüche 1 oder 2, **dadurch gekennzeichnet, dass** wenn der Zählerstand des Fehlerzählers (9) den vorbestimmbaren Mindestwert (31) erreicht oder unterschreitet und wenn die Differenz aus dem aktuellen Zählerstand des Fehlerzählers (9) und dem vorbestimmten Höchstwert (30) größer oder gleich dem Wert 2 ist, die Falschantwort innerhalb des vorgebbaren Zeitbereichs zur Beantwortung einer aktuellen Frage von dem Funktionsrechner (2) an das Überwachungsmodul (3) übermittelt oder von dem Überwachungsmodul (3) empfangen wird.

4. Verfahren nach einem der vorangehenden Ansprüche, **dadurch gekennzeichnet, dass** der vorbestimmte Höchstwert (30) 5 beträgt.

5. Verfahren nach einem der vorangehenden Ansprüche, **dadurch gekennzeichnet, dass** der Funktionsrechner (2) das Übersenden einer Falschantwort an das Überwachungsmodul (3) veranlasst, wenn der aktuelle Zählerstand des Fehlerzählers (9) um mindestes den Wert 2 kleiner ist als der Höchstwert (30).

6. Verfahren nach einem der vorangehenden Ansprüche, **dadurch gekennzeichnet, dass** der Funktionsrechner (2) das Übersenden einer Falschantwort an das Überwachungsmodul (3) veranlasst, wenn der aktuelle Stand des Fehlerzählers (9) um mindestes den Wert 3 kleiner ist als der Höchstwert (30).

7. System, das einen Funktionsrechner (2) und ein Überwachungsmodul (3) zur Überwachung des Betriebs des Funktionsrechners (2) umfasst, wobei
- der Funktionsrechner (2) eine Einrichtung zur Erzeugung einer Antwort in Abhängigkeit von einer von dem Überwachungsmodul (3) an den Funktionsrechner (2) übermittelten Frage aufweist;
- das System eine Einrichtung zur Übermittlung der Antwort an das Überwachungsmodul (3) umfasst;
- dem Überwachungsmodul (3) eine Auswerteeinrichtung zur Auswertung der empfangenen Antwort und ein Fehlerzähler (9) zugeordnet sind, wobei der Fehlerzähler (9) inkrementierbar ist, falls die empfangene Antwort nicht mit einer erwarteten Antwort übereinstimmt und wobei eine Antwort dann mit einer erwarteten Antwort übereinstimmt, wenn die Antwort einen bestimmten Inhalt aufweist und die Antwort zu einem vorgebbaren Zeitpunkt oder innerhalb eines vorgebbaren Zeitbereichs von dem Funktionsrechner (2) an das Überwachungsmodul (3) übermittelt oder von dem Überwachungsmodul (3) empfangen wird und der dem Überwachungsmodul zuordneter Fehlerzähler dekrementiert wird, falls die Antwort mit einer erwarteten Antwort übereinstimmt; und
- das System eine Aktivierungseinrichtung aufweist, mittels der eine Sicherheitsfunktion aktivierbar ist, falls der Fehlerzähler (9) einen vorbestimmten Höchstwert (30) überschreitet;
**dadurch gekennzeichnet, dass**
der Funktionsrechner (2) eine Prüfeinrichtung zum Prüfen eines aktuellen Zählerstands des Fehlerzählers (9) und Mittel zur Veranlassung der Übermittlung einer Falschantwort an das Überwachungsmodul (3) aufweist, wobei die Falschantwort nicht einer erwarteten Antwort entspricht und die Übermittlung der Falschantwort an das Überwachungsmodul (3) dann veranlasst wird, wenn die Prüfung des aktuellen Zählerstands des Fehlerzählers (9) ergibt, dass der Fehlerzähler (9) einen vorbestimmbaren Mindestwert (31) unterschreitet.

8. System nach Anspruch 7, **dadurch gekennzeichnet, dass** das System zur Durchführung eines Verfahrens nach einem der Ansprüche 2 bis 6 eingerichtet ist.

## Claims

1. Method for reducing the response time in a system for monitoring a function computer (2), in which question/answer communication is carried out between a monitoring module (3) and the function computer (2) to be monitored using the monitoring module (3),
- the monitoring module (3) transmitting a question to the function computer (2);
- the function computer (2) determining an answer on the basis of the question;
- the answer being transmitted to the monitoring module (3);
- the received answer being evaluated, and an error counter (9) associated with the monitoring module (3) being incremented if the answer does not correspond to an expected answer, an answer corresponding to an expected answer when the answer has a particular content and the answer is transmitted from the function computer (2) to the monitoring module (3) or is received by the monitoring module (3) at a predefinable time or within a predefinable time range, and the error counter associated with the monitoring module being decremented if the answer corresponds to an expected answer; and
- a current reading of the error counter (9) being checked and an action being initiated if the error counter (9) reaches or exceeds a predetermined maximum value (30);
**characterized in that**
the function computer (2) checks the current counter reading of the error counter (9) and, if the counter reading of the error counter (9) undershoots a predeterminable minimum value (31), the function computer (2) causes an answer which does not correspond to the expected answer to be transmitted to the monitoring module (3).

2. Method according to Claim 1, **characterized in that**, if the counter reading of the error counter (9) reaches or undershoots the predeterminable minimum value (31) and if the difference between the current counter reading of the error counter (9) and the predetermined maximum value (30) is greater than or equal to the value 3, the answer is transmitted to the monitoring module (3) independently of a question to be currently answered.

3. Method according to either of Claims 1 and 2, **characterized in that**, if the counter reading of the error counter (9) reaches or undershoots the predeterminable minimum value (31) and if the difference between the current counter reading of the error counter (9) and the predetermined maximum value (30) is greater than or equal to the value 2, the incorrect answer is transmitted from the function computer (2) to the monitoring module (3) or is received by the monitoring module (3) within the predefinable time range for answering a current question.

4. Method according to one of the preceding claims, **characterized in that** the predetermined maximum value (30) is 5.

5. Method according to one of the preceding claims, **characterized in that** the function computer (2) causes an incorrect answer to be transmitted to the monitoring module (3) if the current counter reading of the error counter (9) is less than the maximum value (30) by at least the value 2.

6. Method according to one of the preceding claims, **characterized in that** the function computer (2) causes an incorrect answer to be transmitted to the monitoring module (3) if the current reading of the error counter (9) is less than the maximum value (30) by at least the value 3.

7. System comprising a function computer (2) and a monitoring module (3) for monitoring the operation of the function computer (2),
- the function computer (2) having a device for generating an answer on the basis of a question transmitted from the monitoring module (3) to the function computer (2);
- the system comprising a device for transmitting the answer to the monitoring module (3);
- an evaluation device for evaluating the received answer and an error counter (9) being associated with the monitoring module (3), the error counter (9) being able to be incremented if the received answer does not correspond to an expected answer, and an answer corresponding to an expected answer when the answer has a particular content and the answer is transmitted from the function computer (2) to the monitoring module (3) or is received by the monitoring module (3) at a predefinable time or within a predefinable time range, and the error counter associated with the monitoring module being decremented if the answer corresponds to an expected answer; and
- the system having an activation device which can be used to activate a safety function if the error counter (9) exceeds a predetermined maximum value (30);
**characterized in that**
the function computer (2) has a checking device for checking a current counter reading of the error counter (9) and means for causing the transmission of an incorrect answer to the monitoring module (3), the incorrect answer not corresponding to an expected answer and the transmission of the incorrect answer to the monitoring module (3) being caused when the check of the current counter reading of the error counter (9) reveals that the error counter (9) undershoots a predeterminable minimum value (31).

8. System according to Claim 7, **characterized in that** the system is set up to carry out a method according to one of Claims 2 to 6.

## Revendications

1. Procédé de réduction du temps de réaction d'un système de surveillance d'un calculateur fonctionnel (2), dans lequel une communication question-réponse est exécutée au moyen du module de surveillance (3) entre un module de surveillance (3) et le calculateur fonctionnel (2) à surveiller et dans lequel
le module de surveillance (3) transmet une question au calculateur fonctionnel (2),
le calculateur fonctionnel (2) détermine une réponse en fonction de la question,
la réponse est transmise au module de surveillance (3),
la réponse reçue est évaluée et un compteur d'erreurs (9) associé au module de surveillance (3) est incrémenté au cas où la réponse ne correspond pas à une réponse attendue, une réponse correspondant à une réponse attendue si la réponse présente un contenu défini et si la réponse a été transmise par le calculateur fonctionnel (2) au module de surveillance (3) ou a été reçue par le module de surveillance (3) à un instant prédéterminé ou à l'intérieur d'une plage temporelle prédéterminée, le compteur d'erreurs associé au module de surveillance étant décrémenté au cas où la réponse correspond à une réponse attendue et
l'état effectif du compteur d'erreurs (9) est vérifié et une action est lancée si le compteur d'erreurs (9) atteint une valeur supérieure prédéterminée (30) ou la dépasse,
**caractérisé en ce que**
l'état effectif du compteur d'erreurs (9) est vérifié par le calculateur fonctionnel (2) et le compteur fonctionnel (2) permet l'envoi d'une réponse qui ne correspond pas à la réponse attendue au module de surveillance (3) si l'état du compteur d'erreurs (9) n'atteint pas une valeur minimale prédéterminée (31).

2. Procédé selon la revendication 1, **caractérisé en ce que** si l'état du compteur d'erreurs (9) atteint la valeur minimale prédéterminée (31) ou reste inférieur à celle-ci et si la différence entre l'état effectif du compteur d'erreurs (9) et la valeur supérieure prédéterminée (30) est supérieure ou égale à la valeur 3, la réponse est envoyée au module de surveillance (3) indépendamment de la question à laquelle il faut répondre à cet instant.

3. Procédé selon l'une des revendications 1 ou 2, **caractérisé en ce que** si l'état du compteur d'erreurs (9) atteint la valeur minimale prédéterminée (31) ou reste inférieure à celle-ci et si la différence entre l'état effectif du compteur d'erreurs (9) et la valeur supérieure prédéterminée (30) est supérieure ou égale à la valeur 2, la réponse erronée est transmise au module de surveillance (3) ou est reçue par le module de surveillance (3) à l'intérieur de la plage temporelle prédéterminée pour répondre à une question effective par le calculateur fonctionnel (2).

4. Procédé selon l'une des revendications précédentes, **caractérisé en ce que** la valeur supérieure prédéterminée (30) vaut 5.

5. Procédé selon l'une des revendications précédentes, **caractérisé en ce que** le calculateur fonctionnel (2) lance l'envoi d'une réponse erronée au module de surveillance (3) si l'état effectif du compteur d'erreurs (9) est inférieur d'au moins la valeur 2 à la valeur supérieure (30).

6. Procédé selon l'une des revendications précédentes, **caractérisé en ce que** le calculateur fonctionnel (2) lance l'envoi d'une réponse erronée au module de surveillance (3) si l'état effectif du compteur d'erreurs (9) est inférieur d'au moins la valeur 3 à la valeur supérieure (30).

7. Système comprenant un calculateur fonctionnel (2) et un module de surveillance (3) qui surveille le fonctionnement du calculateur fonctionnel (2),
le calculateur fonctionnel (2) présentant un dispositif qui forme une réponse en fonction d'une question transmise au calculateur fonctionnel (2) par le module de surveillance (3),
le système comportant un dispositif de transmission de la réponse au module de surveillance (3),
un dispositif d'évaluation qui évalue la réponse reçue et un compteur d'erreurs (9) étant associés au module de surveillance (3), le compteur d'erreurs (9) pouvant être incrémenté au cas où la réponse reçue ne correspond pas à une réponse attendue, une réponse correspondant à une réponse attendue si la réponse présente un contenu défini et si la réponse est transmise par le calculateur fonctionnel (2) au module de surveillance (3) ou est reçue par le module de surveillance (3) à un instant prédéterminé ou à l'intérieur d'une plage temporelle prédéterminée, le compteur d'erreurs associé au module de surveillance étant décrémenté au cas où la réponse correspond à une réponse attendue et
le système présentant un dispositif d'activation qui permet d'activer une fonction de sécurité au cas où le compteur d'erreurs (9) dépasse une valeur supérieure prédéterminée (30),
**caractérisé en ce que**
le calculateur fonctionnel (2) présente un dispositif de vérification qui vérifie l'état effectif du compteur d'erreurs (9) et des moyens qui lancent la transmission d'une réponse erronée au module de surveillance (3), la réponse erronée ne correspondant pas à une réponse attendue,
et **en ce que** la transmission de la réponse erronée au module de surveillance (3) est lancée au cas où la vérification de l'état effectif du compteur d'erreurs (9) indique que le compteur d'erreurs (9) n'atteint pas une valeur minimale prédéterminée (31).

8. Système selon la revendication 7, **caractérisé en ce que** le système est conçu pour exécuter un procédé selon l'une des revendications 2 à 6.
